(19) Europäisches Patentamt

European Patent Office

Office européen des brevets

(11) **EP 1 220 461 A2**

(12) **EUROPEAN PATENT APPLICATION**

(43) Date of publication:
**03.07.2002 Bulletin 2002/27**

(51) Int Cl.$^7$: **H04B 1/48**, H04B 1/38

(21) Application number: **01660210.4**

(22) Date of filing: **19.11.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.12.2000 FI 20002902**

(71) Applicant: **Nokia Corporation**
**02150 Espoo (FI)**

(72) Inventor: **Koskinen, Matti T.**
**25500 Perniö (FI)**

(74) Representative: **Johansson, Folke Anders**
**Nokia Corporation**
**P.O. Box 226**
**00045 Nokia Group (FI)**

(54) **Communication device and method for coupling transmitter and receiver**

(57) A switch structure which operates at high radio frequencies and which does not increase the current consumption of a device. The implementation of the invention is designated as an antenna switch to be used particularly in a mobile communication device which, for a transmitter and a reciver, operates nonsimultaneously and which can use different frequencies for transmitting and receiving. In this implementation, the operation of the switch is based on using transmission lines having an electrical length of $\lambda/4$ in transmitter and receiver branches, impedance conversions provided in the transmission lines then directing a signal in a desired direction. The implementation of the invention is preferably integrated in the front end of the communication device, a multilayer ceramic module being used in the structure thereof, into which module the transmission lines implemented as a strip line structure are supplied.

Fig. 6

## Description

FIELD OF THE INVENTION

The invention relates to a communication device operating at high radio frequencies, and particularly to a switch to be used therein, such as an antenna switch for a mobile communication device, for operatively coupling an antenna of the device to a transmitter or a receiver.

BACKGROUND OF THE INVENTION

The invention relates to a radio frequency switch structure which enables two functional blocks to be coupled to a common coupling point and which switch structure separates these functional blocks, such as a transmitter and a receiver, from each other. The invention particularly relates to an antenna switch structure of a portable digital communication device for separating a transmitter and a receiver from each other and for alternately coupling the same to a common antenna.

The current consumption of mobile communication devices in particular should be as low as possible in order for the operation time of a device to be as long as possible. The device must then be designed such that its current consumption is as low as possible. At the same time, for reasons of competitiveness, use of costly components in the structure of the mobile communication devices should be avoided, and use less expensive solutions instead.

It is usually preferable to integrate the antenna switch structures of digital mobile equipment as parts of an antenna switch module and a duplex filter used for separating, frequency-selectively, the different functions at different times in different areas of the device.

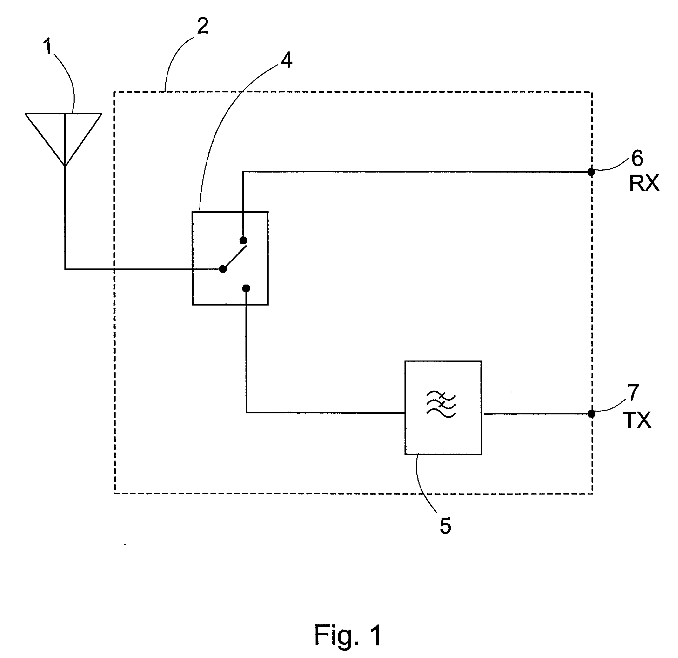

Figure 1 is a schematic block diagram showing the structure of an antenna switch of a mobile communication device operating in one frequency band. The switch is responsible for separating, both in terms of function and time, transmitter and receiver signals at different frequencies. For example, in the European ESGM system, a transmitter operates in a frequency band of 880 to 915 MHz and a receiver in a frequency band of 925 to 960 MHz, and transmitting and receiving take place in different time slots, utilizing TDMA (Time Division Multiple Access). When the transmitter and receiver functions take place at different times, this time-divisional operation requires a switch to separate the two from each other.

In the schematic implementation according to Figure 1, an antenna 1 is coupled to an antenna switch 4 of a module 2, the antenna switch being responsible for coupling a signal either to a receiver branch 6 or to a transmitter branch 7 via a low-pass filter 5 of the transmitter. The low-pass filter 5 is responsible for filtering off the harmonic frequencies of the transmitter. In this embodiment, the structure of the antenna switch 4 has not been defined in closer detail, so it can also be implemented as disclosed in the references, i.e. using switching diodes.

Since such antenna switches do not usually allow switches based on mechanical operation to be used, the antenna switches have been implemented using a separate semiconductive structure, which means that the switching functions have most often been effected by means of switching diodes. Many publications disclose such combined structures comprising a duplex filter and an antenna switch as prior art solutions.

Figure 2 is a block diagram showing a prior art antenna switch according to US 4,637,065 used herein by reference. In the publication, the antenna switch is implemented in a conventional manner using switching diodes $CR_{TX}$, $CR_{RX}$, $CR_D$. Such an implementation has drawbacks described above, such as poor efficiency during transmission and costly switching diodes.

Publication US 5,054,114 discloses another implementation similar to that shown in Figure 3. Also in this one, the antenna switching function is implemented using switching diodes SW1, SW2, wherein the transmitter side is provided with a switching diode SW1 connected in series. This implementation also discloses high frequency filters 18 and 24, which are herein assembled from separate LC components, required in digital systems and necessary for the operation of the transmitter and the receiver.

As can be seen from the previous implementations, the switching diode connected in series with the output of the transmitter is a component which consumes both direct current power and high frequency power of the transmitter. The switching diode is a relatively expensive component and it requires a certain space in the structure. A great disadvantage is particularly the fact that when the transmitter is in operation, the switching diode necessitates forward direct current called bias current, which is always to be higher than the peak value of radio frequency alternating current. Furthermore, the radio frequency alternating current of the transmitter passing through the diode causes a power loss therein, which has to be compensated for by increasing the transmitter power by a value corresponding to the diode attenuation. The facts mentioned above impair the efficiency of the transmitter, shortening the operation time obtained by one charging of a battery in a mobile communication device.

Mobile telephones are also currently known that are capable of communicating at two different frequency bands (e.g. GSM 900 MHz and GSM 1800 MHz), i.e. they are capable of transmitting within two different transmission frequency bands and capable of receiving within two different receiving frequency bands. A radio frequency and antenna switch solution for such a mobile telephone is disclosed in publication US 6,014,551. The mobile telephone comprises two different transceivers which are separated by an antenna switch (reference 26 in Figure 1 of the publication) located immediately in connection with an antenna, the antenna switch thus separating the transceiver branch of the first frequency band and the transceiver branch of the second frequency band. Typically, this antenna switch is implemented using a switching diode connected in series with a transmitter, the switching diode thus causing power losses as described above.

BRIEF DESCRIPTION OF THE INVENTION

An object of the invention is thus to provide a radio frequency switch in which, particularly on the transmitter side, no switching diode connected in series with the output of a transmitter is needed, and which can be replaced by a less expensive implementation having a lower current consumption. Another object is to enable the input of a receiver to be efficiently separated from the output of a transmitter.

A radio frequency communication device implemented according to a first aspect of the invention comprises a transmitter and a receiver, and a switch circuit comprising a transmitter branch and a receiver branch coupled to a common coupling point in order to alternately couple an output of the transmitter and an input of the receiver to said coupling point, characterized in that the transmitter branch comprises a first transmission line which has a determined characteristic impedance and which is arranged to be coupled to the transmitter having a first impedance when the transmitter is switched on and a second impedance when the transmitter is switched off, and in that said first impedance is in the order of the characteristic impedance of said first transmission line without causing an impedance conversion and allowing signal propagation in the transmitter branch, and in that said second impedance is a low impedance in comparison to the characteristic impedance of said first transmission line, causing, as a result of an impedance conversion, a high impedance preventing signal propagation in the transmitter branch, and in that said coupling is implemented by switching the transmitter on and off.

A radio frequency communication device implemented according to a second aspect of the invention comprises a transmitter and a receiver, and a switch circuit comprising a transmitter branch and a receiver branch coupled to a common coupling point in order to alternately couple an output of the transmitter and an input of the receiver to said coupling point, characterized in that the receiver branch comprises a transmission line which has a determined characteristic impedance and a switch coupled between one end of the transmission line and the ground in order to open and short-circuit said end of the transmission line in order to alternately cause an impedance conversion in order to alternately generate a high impedance to prevent signal propagation and alternately not to cause an impedance conversion to allow signal propagation in the receiver branch.

A method implemented according to a third aspect of the invention for alternately coupling an output of a radio frequency transmitter and an input of a receiver to a common coupling point, characterized by arranging, in a transmitter branch, a first transmission line which has a determined characteristic impedance and which is coupled to the transmitter, and by alternately coupling the transmitter between a first and a second state, in which first state said transmitter is switched on, the transmitter thus having a first impedance which is in the order of the characteristic impedance of said first transmission line without causing an impedance conversion and allowing signal propagation in the transmitter branch, and in which second state said transmitter is switched off, the transmitter thus having a second impedance, which is a low impedance in comparison to the characteristic impedance of said first transmission line, causing, as a result of an impedance conversion, a high impedance preventing signal propagation in the transmitter branch.

A dual band radio frequency communication device implemented according to a fourth aspect of the invention, comprising

a first transceiver branch for processing transmit and receive signals of a first frequency band,

a second transceiver branch for processing transmit and receive signals of a second frequency band,

an antenna for transmitting and receiving the signals of said first and said second frequency bands,

at least one filter operatively coupled to the antenna for passing the transmit and receive signals of said first frequency band to the first transceiver branch and for passing the transmit and receive signals of said second frequency band to the second transceiver branch,

said first transceiver branch comprising a first transmitter and a first receiver, and

said second transceiver branch comprising a second transmitter and a second receiver, **characterized** in that

said first transceiver branch comprises a first switch circuit comprising a first transmitter branch and a first receiver branch coupled to a common first coupling point in order to alternately couple an output of the first transmitter and an input of the first receiver to said first coupling point,

said first transmitter branch comprises a first transmission line which has a determined first characteristic impedance and which is arranged to be coupled to the first transmitter comprising a first impedance when the transmitter is switched on and a second impedance when the transmitter is switched off, and in that said first impedance is in the order of said first characteristic impedance without causing an impedance conversion and allowing signal propagation in the first transmitter branch, and in that said second impedance is a low impedance in comparison to said first characteristic impedance, causing, as a result of an impedance conversion, a high impedance preventing signal propagation in the first transmitter branch, and in that said coupling in the first switch circuit is implemented by switching the first transmitter on and off,

said second transceiver branch comprises a second switch circuit comprising a second transmitter branch and a second receiver branch coupled to a common second coupling point in order to alternately couple an output of the second transmitter and an input of the second receiver to said second coupling point,

said second transmitter branch comprises a second transmission line which has a determined second characteristic impedance and which is arranged to be coupled to the second transmitter comprising a third impedance when the transmitter is switched on and a fourth impedance when the transmitter is switched off, and in that said third impedance is in the order of said second characteristic impedance without causing an impedance conversion and allowing signal propagation in the second transmitter branch, and in that said fourth impedance is a low impedance in comparison to said second characteristic impedance, causing, as a result of an impedance conversion, a high impedance preventing signal propagation in the second transmitter branch, and in that said coupling is implemented in the second switch circuit by switching the second transmitter on and off, and

said filter is located between the antenna and said first and second coupling points.

The solution of the invention comprises no switching diode connected in series with the output of the transmitter to use electric power, but in the solution of the invention the switching functions are based on using a transmission line which enables signal transmission and great impedance conversions between the input and output ends of the transmission line to be achieved. According to the known component technology, this is preferably implemented using transmission lines having an electrical length of a quarter of a wavelength ($\lambda/4$) at the output of the transmitter and at the input of the receiver, enabling signal transmission and desired impedance conversions. Such a switching function is preferably implemented in connection with a duplex filter of a two-frequency mobile communication device which is responsible for separating the different frequency signals of the receiver and transmitter branches.

DESCRIPTION OF THE DRAWINGS

The invention will be described with reference to both prior art embodiments and schematic drawings presenting the same and to the drawings describing the invention in closer detail, in which

Figure 1 schematically shows a known implementation of a low-pass filter and an antenna switch of a transmitter in a mobile communication device,

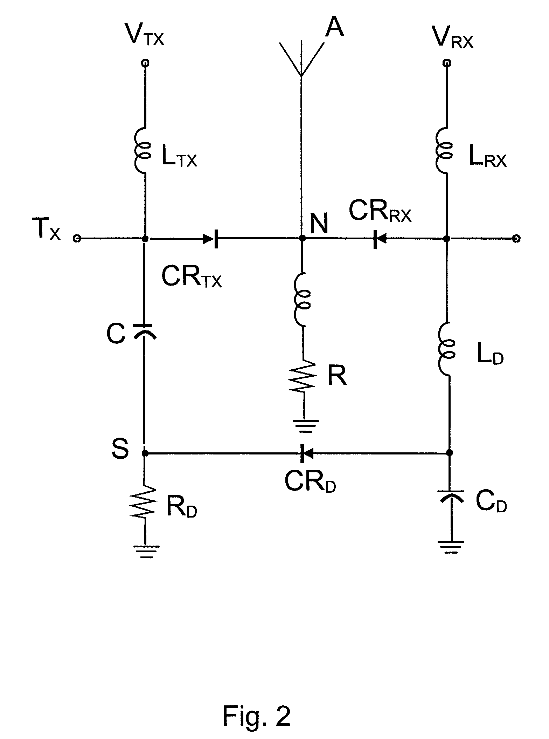

Figure 2 shows a prior art structure of the antenna switch,

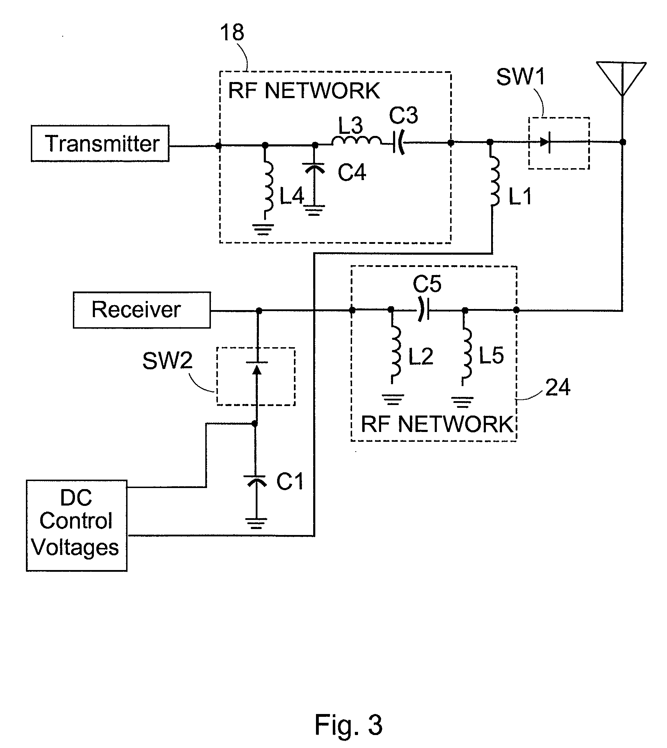

Figure 3 shows another prior art implementation of an antenna switch equipped with RX and TX filters,
Figure 4 schematically shows a coupling of an embodiment of the present invention when the switching functions have been implemented using transmission lines having an electrical length of $\lambda/4$,
Figures 5a to 5d schematically show transmission lines having an electrical length of $\lambda/4$ or less,
Figure 6 schematically shows the structure of an antenna switch in connection with a duplex filter of a dual band digital mobile communication device, and
Figure 7 is a block diagram showing a communication device of the invention.

DETAILED DESCRIPTION OF THE INVENTION

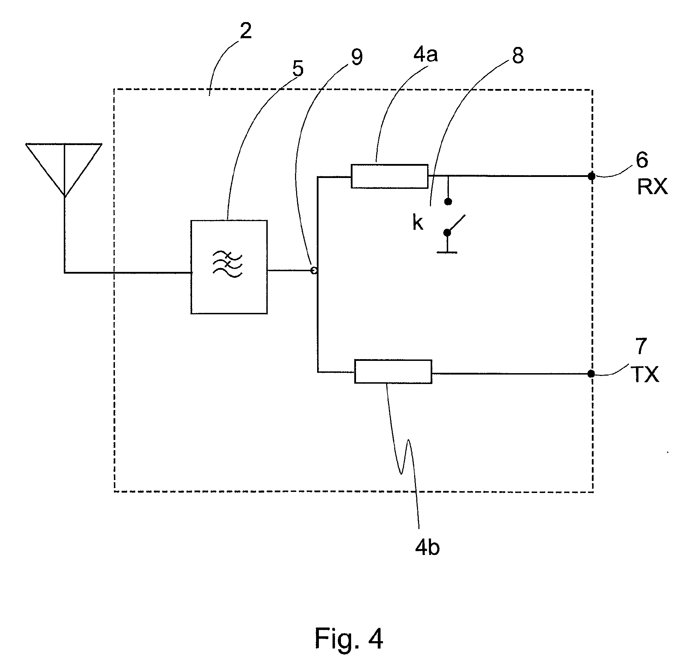

Figure 4 shows an implementation in accordance with the present invention of an antenna switching function of a mobile communication device operating in one frequency band. In this exemplary implementation, reference 2 designates a high frequency module in its entirety, which can be implemented as one component, implemented e.g. using a so-called multilayer ceramic technology. The antenna switching function is implemented using transmission lines having an electrical length of $\lambda/4$. From an antenna, a signal is supplied to a low-pass filter 5, which is responsible for filtering off the harmonic frequencies of a transmitter. From a combination point 9, the signal passed through the low-pass filter 5 branches into two transmission lines 4a and 4b having an electrical length of $\lambda/4$. The length of the transmission line 4a of the receiver branch is determined according to the mean value of the operating frequencies of a receiver. An output point 6 of the receiver branch of the transmission line 4a is connected to the ground by a switch K (reference 8) when the transmitter is in operation. A high impedance is then converted at the starting point (i.e. the combination point 9) of the receiver branch, which means that the transmit signal obtained from the transmitter branch is not coupled to the receiver side. In the receive mode, the switch 8 is open, and the signal obtained from the transmission line 4a of the receiver is supplied to the receiver 6 of the mobile communication device. The output point of the transmission line 4b of the transmitter branch, the length of which is determined according to the mean value of the operating frequencies of the transmitter, is coupled to an output 7 of the transmitter. The switch 8 is preferably implemented as a diode, but it is not harmful since the diode is connected in parallel to the ground, thus causing no losses in the manner similar to that of a prior art switching diode connected in series with the transmitter.

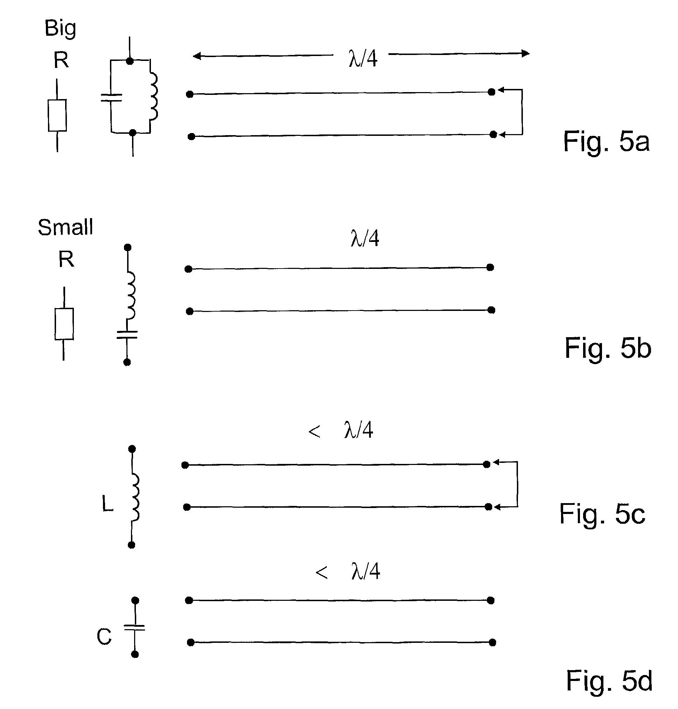

Figures 5a to 5d schematically show a transmission line having an electrical length of $\lambda/4$ in different coupling situations. If the permittivity of the medium of the conductors differs from the permittivity of a vacuum, as in practice is always the case, this should be taken into account by means of a so-called velocity factor. The velocity factor is the lower the higher the permittivity of the medium of the conductors. The propagation rate of high frequency electric current in the conductors is then lower than in a vacuum. In an ideal case, the line operates as a resonance circuit. If one end of the line is short-circuited, as shown in Figure 5a, the line looks like a parallel resonance circuit when seen from the other end, which is designated by symbols on the left in Figure 5a. Its resonance frequency is then proportional to the line wavelength (f = c/λ), wherein c = speed of light. In the resonance, the other end of the line then corresponds to en extremely high resistance.

When one end of a λ/4 long transmission line is open, as shown in Figure 5b, the line looks like a series-resonant circuit when seen from the other end, as shown by symbols on the left in Figure 5b. In the resonance, the other end of the line then corresponds to an extremely low resistance.

If the length of a transmission line is less than the electrical length of λ/4, when its one end is short-circuited, the other end of the line corresponds to an inductance, as shown in Figure 5c.

Similarly, when one end of a transmission line having a length less than λ/4 is open, the other end of the line corresponds to a capacitance, as shown in Figure 5d.

If one end of the transmission line having an electrical length of λ/4 is not short-circuited or open but an extrinsic input impedance Z has been coupled thereto, an impedance conversion will follow. An impedance conversion in the transmission line having an electrical length of λ/4 is in accordance with equation

$$Zi = Z0 x Z0 / ZI \qquad [1].$$

When the characteristic impedance of the transmission line is Z0 and an impedance ZI is coupled to one end of the transmission line, it appears to have magnitude Zi when seen from the other end of the line. Since the impedance levels of the input and output points of the functional blocks in radio communication devices have been established as 50 Ω, the input and output impedances of all ports of such a device should be 50 Ω at the operating frequencies of such devices. This ensures signal propagation in desired directions in the device and optimal power adaptation between stages. Hence, the characteristic impedance of λ/4 transmission lines should also be 50 Ω. When the characteristic impedance Z0 of the transmission line is 50 Ω, equation [1] above is of the form

$$Zi = 2500 / ZI \qquad [2].$$

If Zi and ZI then are 50 Ω, no impedance conversion will follow. If Zi and ZI differ from the characteristic impedance of the transmission line, an impedance conversion follows according to equation [2] above. When the extrinsic impedance ZI coupled to the transmission line is extremely low, it causes a great impedance conversion to the other end of the line where the impedance level may be hundreds or thousands of ohms, according to the equation above (e.g. 2.5 kΩ when ZI = 1). Although the implementation of the transmission line has not been described in closer detail herein, transmission lines particularly in mobile communication devices are preferably implemented as strip structures, as is known from ceramic filters. These and the other components of a duplex filter can preferably be implemented using a multilayer ceramic module. Such an implementation is typified by small losses and size.

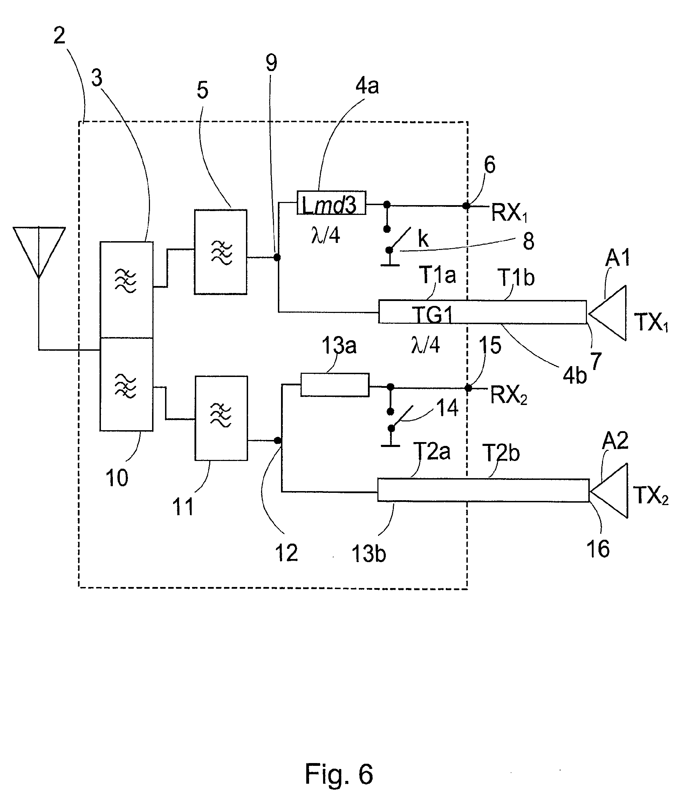

Based on the above, Figure 6 shows a novel solution for implementing an antenna switch in connection with a duplex filter of a dual band mobile communication device, wherein references 2 to 9 designate parts of an antenna switch of a first, lower frequency band and wherein references 10 to 16 designate parts of an antenna switch of a second, higher frequency band. The dual-band solution requires a duplex filter to separate the frequency bands. The higher frequency bands are 1710 to 1785 MHz (TX) and 1805 to 1880 MHz (RX) when operating in a DCS system, and the aforementioned lower frequency bands are of the 900 MHz band when operating in an EGSM system. Since the functions in both frequency bands are similar, except for the different frequencies of the EGSM and DCS systems, only the operation of an EGSM module operating at a lower frequency band will be described herein.

In accordance with what has been disclosed above, the solution is characterized in that it does not need a switching diode at the output of the transmitter. Both the output 7, 16 of the transmitter and the input 6, 15 of the receiver are, with respect to the operating frequencies of both of them, provided with transmission lines 4a and 4b (and 13a and 13b correspondingly) having an electrical length of a quarter λ/4 that enable the desired impedance conversions according to equations [1] and [2], as described above (taking also the output stage impedance into account in the electrical length). These impedance conversions ensure signal propagation following a desired path both for the transmitter and the receiver when they operate nonsimultaneously and alternately. When the transmitter is in operation, its output impedance at points indicated by references 7 and 16 is 50 Ω, which, for the operation of the transmission line 4b and 13b of the transmitter, is the Zi value of its starting point (wherein A1 and A2 designate an amplifier of the transmitter). The other end of the transmission line 4b, 13b is coupled to the input of the low-pass filter 5 and 11 correspondingly of the transmitter, the impedance thereof at the operating frequencies of the transmitter preferably being 50 Ω. When a transmitter $TX_1$ is in operation, the input circuit 6 of an EGSM receiver is attenuated by keeping the switch K (8) closed (and, similarly, the input circuit 15 is attenuated by closing the switch 14 when a transmitter $TX_2$ is in operation). The load impedance ZI of the transmission line Lmd3 (reference 4a) of the receiver is then extremely low. It converts into an extremely high impedance at the starting point (i.e. at reference 9) of the transmission line 4a, which does not load the output signal of the transmitter but which prevents the output signal from entering the receiver branch.

When the transmitter $TX_1$ is not in operation, the output impedance of the transmitter (at reference 7 and, correspondingly, at reference 16) is extremely low (e.g. $3.25\Omega + i3.25\Omega$), which causes a great impedance conversion in the transmission line 4b of the transmitter and which can be seen at the other end of the transmission line 4b of the transmitter (i.e. at reference 9) as a high impedance preventing the receive signal from entering the transmitter branch but allowing it into the receiver branch. The output impedance of the transmitter must thus be extremely low when the transmitter is not in operation (when, typically, the receive mode prevails). When the receiver is then in operation, the for the receiver branch high-impedance transmitter branch does not show as an impedance loading the receiver and does not attenuate the receiver branch signal. The received signal from the antenna then propagates in the direction of a receiver $RX_1$ (and correspondingly $RX_2$), the switch K (8) then being open. These impedance conversions caused by the transmission lines ensure signal propagation in a desired direction both for the transmitter and the receiver when they operate nonsimultaneously and alternately, e.g. as is known from mobile communication devices utilizing TDMA (Time Division Multiple Access). It is known to one skilled in the art that the invention is applicable also to other similar digital communication systems than those mentioned herein.

According to a preferred embodiment of the invention, the transmission line 4b (and 13b correspondingly) of the transmit line is implemented as two parts such that one part T1a (T2a correspondingly) is implemented in the same part as the rest of the antenna switch, i.e. in module 2, the other part T1b (T2b correspondingly) being positioned on a circuit board outside the antenna switch, to which circuit board both the ceramic antenna switch module and the power amplifier module of the transmitter are attached, as shown in Figure 6. Part T1a (and T2a) is implemented as a strip line in the ceramic module and part T1b (and T2b) is implemented as a conductor (e.g. as a conductor having a zig-zag form) on the circuit board, e.g. as a microstrip transmission line. Parts T1a and T1b (and T2a and T2b correspondingly) are designed such that the characteristic impedance of the transmission line 4b (and 13b correspondingly) is 50 Ω. The output impedance of the transmitter A1 is taken into account in the design of the lengths of parts T1a and T1b such that when the receiver is in operation, the for the receiver branch high-impedance transmitter branch does not show as an impedance loading the receiver and does not attenuate the receiver branch signal. Parts T1a and T1b can thus be designed when the output impedance at reference 7 (and at reference 16 correspondingly) is known. In a simulation conducted, the transmission line 4b was implemented such that its total electrical length was 70 mm, 15 mm thereof being implemented in the antenna module 2, i.e. as part T1a, and 55 mm on the circuit board, i.e. as part T1b. Implementing the transmission line as parts T1a and T1b enables the transmission line to be implemented small-sized when it does not have to be implemented in its entirety in the ceramic switch module or circuit board whose permittivity (e.g. $\varepsilon_r = 3.6$) is very different from the permittivity of the ceramic module (e.g. $\varepsilon_r = 8.1$), which affects the design. Furthermore, some distance is inevitably provided between the antenna switch component and the output stage component of the transmitter, which has to be included in the length of the transmission line. Hence, in an implementation, transmission line part T1a was implemented using measurements L = 16.4 mm and W = 0.090 mm and $\varepsilon_r = 8.1$, whereas transmission line part T1b was implemented using measurements L = 9.0 mm and W = 0.564 mm and $\varepsilon_r = 3.6$, in which case the latter can be implemented as a straight conductor between the antenna switch component and the output stage component of the transmitter. This is a suitable distance between the components, so the transmission line 4b can thus be readily formed using two different parts, utilizing at the same time the distance inevitably being provided between the two components. In the same simulation, the impedance of the transmitter (at reference 7) was 3.25 Ω + i3.25 Ω when the transmitter was switched off. Similarly, in the solution of two different frequency bands according to Figure 6, the transmission line 13b was implemented such that the length L = 5.4 mm of part T2a of the transmission line and the length L = 9.0 mm of part T2b of the transmission line (the widths correspondingly as above and the common electrical length of the entire transmission line 13 being λ/4) and in the simulation conducted, the impedance of the output stage A2, i.e. the higher frequency transmitter $TX_2$, was 6.0 Ω + i30.0 Ω (at reference 16). The simulations conducted show that the solution of Figure 6 works well. In the same simulation, the transmission lines of the receiver branch were implemented such that the length L = 27.4 mm and width W = 89.4 μm, i.e. roughly W = 0.090 mm, of the transmission line 4a ( i.e. for receiving GSM 900 MHz frequencies) and the length L = 15.1 mm and width W = 0.090 mm of the transmission line 13a (i.e. for receiving GSM/DCS 1800 MHz frequencies). In the above example, the lengths of both transmission lines T1b and T2b are the same. This is an advantage when module 2 of Figure 6 is implemented as one ceramic multilayer component because it can thus be located on the circuit board at a 9.0 mm distance from both output stages A1 and A2 which, if desired, can thus be integrated into a common component, and thus the two conductors T1b and T2b between the output stages A1 and A2 of module 2 can be implemented as straight 9.0 mm conductors on the circuit board and module 2 can be located at one end of the conductors and the output stages at the other, opposite end. This is an easy solution to apply during manufacture. In a similar manner to what has been described above and shown in Figure 6, can be implemented for three different frequency bands by adding a third similar branch e.g. to the components 10 to 16 of the second branch in Figure 6. As disclosed above, it is then preferable to arrange the length of the transmission line (T1b and T2b in Figure 6) external to the module of each three branches to be the same in order to provide an easy solution as far as assembling is concerned, the solution thus being well suited to automated mass production wherein components are arranged on a circuit board mechanically.

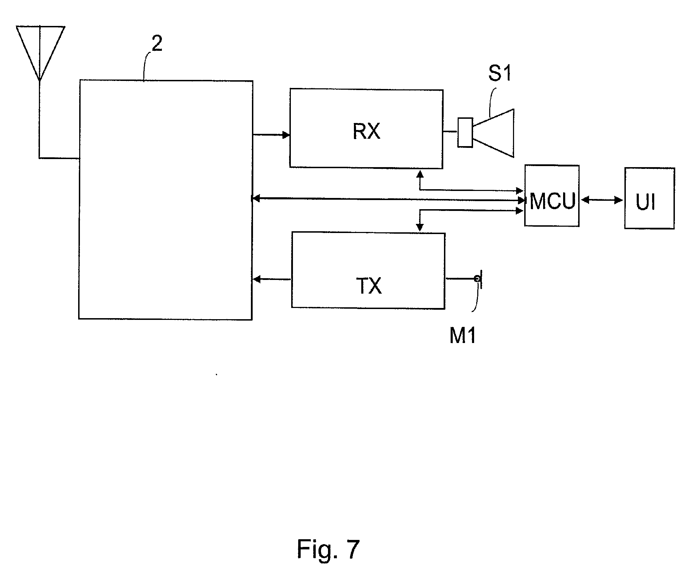

Figure 7 is a block diagram showing a communication device of the invention, which is e.g. a mobile telephone of a cellular system. It comprises an antenna and an antenna switch 2, e.g. an antenna according to 4 or 6, coupled to the antenna. A receiver RX is connected to the antenna switch 2 to implement ordinary receiver functions (e.g. demodulation, decryption, deinterleaving, channel decoding and speech decoding) before a signal is repeated by a loudspeaker S1. Similarly, a transmitter TX is coupled to the antenna switch to implement ordinary receiver functions (e.g. speech coding, channel coding, interleaving, encryption and modulation). The communication device further comprises an MCU (Master Control Unit) to control its operation and timing and an interface IU connected thereto, which comprises e.g. a keypad and a display to enable the communication device to be used. The control unit MCU thus also controls opening and closing the switch 8 and switching on and off the transmitter A1.

An advantage of the invention is particularly that no prior art switching diode connected in series is needed on the transmitter side to cause loss when, according to the invention, impedance conversions implemented using transmission lines are utilized taking the impedances of the transmission lines into account and short-circuiting the achieved impedance conversions and the impedance of the transmitter when the transmitter is switched on and when the transmitter is switched off, short-circuiting the impedance conversion caused by the transmitter.

The implementation and embodiments of the invention have been disclosed herein by means of examples. It is obvious to one skilled in the art that the invention is not restricted to the details of the embodiments disclosed above and that the invention can be implemented also in another form without deviating from the characteristic features of the invention. The embodiments set forth should be understood to be illustrative but not restrictive. The way in which the invention can be implemented and used is thus restricted by the attached claims only. The different embodiments of the invention, including equivalent implementations, defined by the claims thus lie within the scope of the invention.

**Claims**

1. A radio frequency communication device comprising a transmitter (TX$_1$, A1) and a receiver, and a switch circuit (2) comprising a transmitter branch and a receiver branch coupled to a common coupling point (9) in order to alternately couple an output of the transmitter and an input of the receiver to said coupling point (9), **characterized in that** the transmitter branch comprises a first transmission line (4b) which has a determined characteristic impedance and which is arranged to be coupled to the transmitter (TX$_1$, A1) having a first impedance when the transmitter is switched on and a second impedance when the transmitter is switched off, and **in that** said first impedance is in the order of the characteristic impedance of said first transmission line without causing an impedance conversion and allowing signal propagation in the transmitter branch, and **in that** said second impedance is a low impedance in comparison to the characteristic impedance of said first transmission line, causing, as a result of an impedance conversion, a high impedance preventing signal propagation in the transmitter branch, and **in that** said coupling is implemented by switching the transmitter (TX$_1$, A1) on and off.

2. A communication device as claimed in claim 1, **characterized in that** the receiver branch comprises a second transmission line (4a) having a determined characteristic impedance and a switch (8) coupled between one end of the second transmission line and the ground in order to open and short-circuit said end of the transmission line in order to alternately cause an impedance conversion in order to alternately generate a high impedance to prevent signal propagation and alternately not to cause an impedance conversion to allow signal propagation in the receiver branch.

3. A communication device as claimed in claim 1 or 2, **characterized in that** said first and second transmission lines have an electrical length of a quarter wave.

4. A communication device as claimed in claim 3, **characterized in that** said switch circuit is implemented as a dielectric element arranged on a circuit board together with a transmitter component comprising a transmitter, and **in that** said first transmission line (4b) is implemented as two parts, a first part (T1a) being implemented in the dielectric element and a second part (T1b) being implemented on the circuit board outside the dielectric component.

5. A communication device as claimed in claim 4, **characterized in that** said dielectric component is a ceramic component made of a ceramic material.

6. A communication device as claimed in any one of the preceding claims, **characterized in that** for transmitting, the communication device is arranged to control the transmitter (TX$_1$, A1) to be switched on and said switch (8) to be closed in order to allow signal propagation in the transmitter branch and in order to prevent signal propagation in the receiver branch, and for receiving, the communication device is arranged to control the transmitter to be switched off and said switch (8) to be open in order to allow signal propagation in the receiver branch and in order to prevent signal propagation in the transmitter branch.

7. A radio frequency communication device comprising a transmitter (TX$_1$, A1) and a receiver, and a switch circuit (2) comprising a transmitter branch and a receiver branch coupled to a common coupling point (9) in order to alternately couple an output of the transmitter and an input of the receiver to said coupling point (9), **characterized in that** the receiver branch comprises a transmission line (4a) having a determined characteristic impedance and a switch (8) coupled between one end of the transmission line and the ground in order to open and short-circuit said end of the transmission line in order to alternately cause an impedance conversion in order to alternately generate a high impedance to prevent signal propagation and alternately not to cause an impedance conversion to allow signal propagation in the receiver branch.

8. A communication device as claimed in claim 7, **characterized in that** the end of the transmission line coupled to said switch is in connection to the receiver of the communication device and the other, opposite end of the transmission line is coupled to said common coupling point.

9. A method for alternately coupling an output of a radio frequency transmitter and an input of a receiver to a common coupling point (9), **characterized by** arranging, in a transmitter branch, a first transmission line (4b) which has a determined characteristic impedance and which is coupled to the transmitter (TX$_1$, A1), and by alternately coupling the transmitter between a first and a second state, in which first state said transmitter is switched on, the transmitter thus having a first impedance which is in the order of the characteristic impedance of said first transmission line without causing an impedance conversion and allowing signal propagation in the transmitter branch, and in which second state said transmitter is switched off, the transmitter thus having a second impedance, which is a low impedance in comparison to the characteristic impedance of said first transmission line, causing, as a result of an impedance conversion, a high impedance preventing signal propagation in the transmitter branch.

10. A dual band radio frequency communication device comprising
    a first transceiver branch for processing transmit and receive signals of a first frequency band,
    a second transceiver branch for processing transmit and receive signals of a second frequency band,
    an antenna for transmitting and receiving the signals of said first and said second frequency bands,
    at least one filter (3, 5, 10, 11) operatively coupled to the antenna for passing the transmit and receive signals of said first frequency band to the first transceiver branch and for passing the transmit and receive signals of said second frequency band to the second transceiver branch,
    said first transceiver branch comprising a first transmitter (TX$_1$, A1) and a first receiver (RX$_1$), and
    said second transceiver branch comprising a second transmitter (TX$_2$, A2) and a second receiver (RX$_2$), **characterized in that**
    said first transceiver branch comprises a first switch circuit (2) comprising a first transmitter branch and a first receiver branch coupled to a common first coupling point (9) in order to alternately couple an output of the first transmitter and an input of the first receiver to said first coupling point (9),
    said first transmitter branch comprises a first transmission line (4b) which has a determined first characteristic impedance and which is arranged to be coupled to the first transmitter (TX$_1$, A1) comprising a first impedance when the transmitter is switched on and a second impedance when the transmitter is switched off, and **in that** said first impedance is in the order of said first characteristic impedance without causing an impedance conversion and allowing signal propagation in the first transmitter branch, and **in that** said second impedance is a low impedance in comparison to said first characteristic impedance, causing, as a result of an impedance conversion, a high impedance preventing signal propagation in the first transmitter branch, and **in that** said coupling in the first switch circuit is implemented by switching the first transmitter (TX$_1$, A1) on and off,
    said second transceiver branch comprises a second switch circuit comprising a second transmitter branch and a second receiver branch coupled to a common second coupling point (12) in order to alternately couple an output of the second transmitter and an input of the second receiver to said second coupling point (12),

said second transmitter branch comprises a second transmission line (13b) which has a determined second characteristic impedance and which is arranged to be coupled to the second transmitter ($TX_2$, A2) comprising a third impedance when the transmitter is switched on and a fourth impedance when the transmitter is switched off, and **in that** said third impedance is in the order of said second characteristic impedance without causing an impedance conversion and allowing signal propagation in the second transmitter branch, and **in that** said fourth impedance is a low impedance in comparison to said second characteristic impedance, causing, as a result of an impedance conversion, a high impedance preventing signal propagation in the second transmitter branch, and **in that** said coupling in the second switch circuit is implemented by switching the second transmitter ($TX_2$, A2) on and off, and

said filter (3, 5, 10, 11) is located between the antenna and said first (9) and second (12) coupling points.

Fig. 1

Fig. 2

Fig. 3

Fig. 4

Fig. 5a

Fig. 5b

Fig. 5c

Fig. 5d

Fig. 6

Fig. 7